# EUROPEAN PATENT APPLICATION

(11) **EP 4 206 509 A2**
(43) Date of publication of application: **05.07.2023**
(21) Application number: 22211348.2
(22) Date of filing: 05.12.2022
(51) Int. Cl.: F16K 49/00

(54) **LINEAR ACTUATOR AND HEATING PAD FOR A LINEAR ACTUATOR**

(30) Priority: 09.12.2021 CH 0706872021
(71) Applicant: Belimo Holding AG, 8340 Hinwil (CH)
(72) Inventor: GRAF, Benno, 8645 Rapperswil-Jona (CH)
(74) Representative: Lermer, Christoph

(57) **Abstract**

A linear actuator (2) for use in HVAC applications comprises an actuator housing (20); and an adapter having a first clamping jaw (3a) and a second clamping jaw (3b) for fixing the linear actuator to a globe valve. In order to prevent formation of ice in or on the surfaces of the globe valve when environmental temperatures are below 0° C, active heating is required. For this purpose a heating pad (5) made of silicone is fixed to the first clamping jaw (3a) and the second clamping jaw (3b).

## Description

### TECHNICAL FIELD

The application relates to a linear actuator for use in HVAC applications comprising: an actuator housing; and an adapter having a first clamping jaw and a second clamping jaw connected to the housing for fixing the linear actuator to a globe valve. Furthermore, the application relates to a heating pad provided for fixing the heating pad to a linear actuator.

### BACKGROUND OF THE INVENTION

In the field of heating, ventilation and air-conditioning systems (HVAC) of buildings, in particular residential buildings, office buildings, commercial buildings and industrial buildings, automatic fluid flow measurement and regulation becomes more and more important. To this end, the buildings are equipped with a plurality of sensors and actuators for measuring and regulating, respectively, the flow of fluid. Among others, globe valves are used for flow control. A globe valve requires a linear actuator which is assembled to the globe valve by means of an adapter. Conventional adapters may be assembled to the globe valve via clamping jaws.

In low temperature applications, the valve may have to be heated in order to avoid freezing of the fluid conducted through the valve and to ensure accurate operation of the valve. Conventionally, heating is facilitated by metallic clamping jaws comprising heating elements. The metallic clamping jaws are adapted to be fixed to a valve specific connecting portion. Providing metallic clamping jaws, however, requires specific solutions for different valves. Furthermore, clamping jaws require a docking portion at the valve, need relatively much space (that may not be available) and have a relatively complex structure. Furthermore, additional time and effort for assembly of the heating clamping jaws must be taken into account.

### OBJECT OF THE INVENTION

It is an object of the present invention to provide a linear actuator for use in HVAC applications having a heating device which is simple in structure and easily mountable to a linear actuator.

### TECHNICAL SOLUTION

This object is attained by providing a linear actuator for use in HVAC applications according to claim 1, comprising: an actuator housing; and an adapter having a first clamping jaw and a second clamping jaw connected to the housing for fixing the linear actuator to a globe valve. The linear actuator comprises a heating pad fixed to the first clamping jaw and the second clamping jaw.

The clamping jaws are connected to the housing of the linear valve by connecting bars. For fixing/ assembling the linear actuator to the globe valve the jaws are closed around a slightly conical interface of the globe valve. The heating pad is fixed to both clamping jaws before the clamping jaws are fixed to the conical interface, particularly to a surface of the conical interface averted from the global valve, i.e. facing in a direction opposite the globe valve.

Particularly, the heating pad is a one-piece silicone pad.

In a preferred embodiment of the invention the heating pad is glued to the clamping jaws. It may be glued to a surface of the clamping jaws, particularly a surface facing the housing of the linear actuator. Particularly, the heating pad has an adhesive foil attached to a surface of a body of the pad.

The pad may comprise a first portion to be fixed to a surface of the first clamping jaw, a second portion to be fixed to a surface of the second clamping jaw, and at least a flexible connecting piece connecting the first portion and the second portion of the pad. The first and second portion may comprise adhesive areas and the connecting piece may not have adhesive areas. The connecting piece is provided for bridging a gap between the clamping jaws. The shape of the pad may be adapted to the shape of the clamping jaws. Particularly, the pad may have an opening corresponding to the receiving opening located between the jaws. When the jaws are closed, the elastic connecting piece is compressed as the width of the gap is reduced.

In particular, the pad comprises two connecting pieces, particularly formed as connecting bands, each of them connecting the first portion and the second portion of the pad.

The pad may comprise an opening corresponding to an opening arranged between the clamping jaws, wherein the clamping jaws are configured for enclosing a conical portion of the globe valve. The opening may be arranged between the connecting pieces/bands and the first and second portion of the pad. The object is also attained by a heating pad adapted for fixing the heating pad to a linear actuator of a globe valve, wherein the heating pad is a silicone pad having a silicone body and heating elements, e.g. heating wires, embedded in the silicone body.

The heating pad may comprise a first portion to be fixed to a first clamping jaw of an adapter, a second portion to be fixed to a second clamping jaw of the adapter, and at least a flexible connecting piece connecting the first portion and the second portion of the pad.

The heating pad may have a shape, configuration, and be made of material as described above, and it may be used in applications as described above.

### BRIEF DESCRIPTION OF THE DRAWINGS

The invention will be explained in greater detail with reference to the exemplary embodiments which are illustrated in the drawings.
Fig. 1 is a perspective view of a specific conventional global valve;
Fig. 2 is a perspective view and a top view, respectively, of a conventional construction of heating jaws and a globe valve in a separated and in a fixed state, respectively;
Figs. 3, 4 are side views of a linear actuator according to the invention to be coupled to a valve,
the jaws being in an open state and in a closed state, respectively;
Fig. 5 is a top view of a heating pad according to the invention;
Fig. 6 is a perspective view of an assembly including a silicone pad and clamping jaws according to the invention.

### DESCRIPTION OF PREFERRED EMBODIMENTS OF THE INVENTION

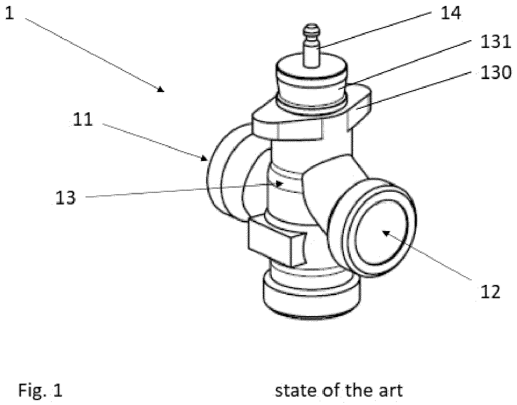

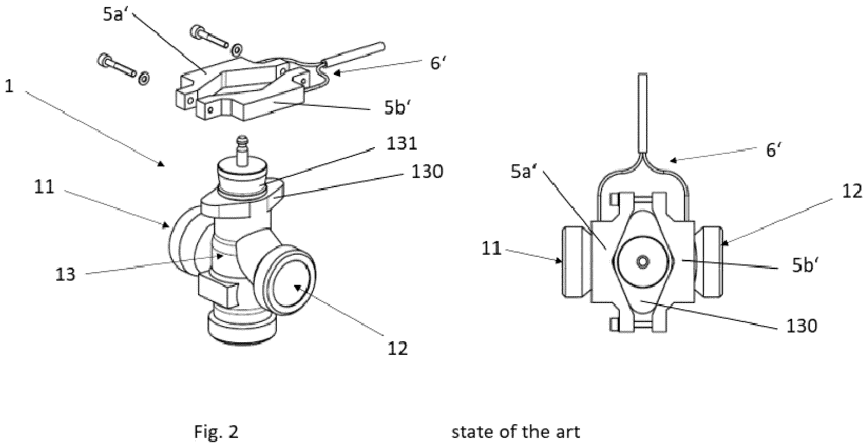

Figs 1 and 2 1 illustrate a specific conventional globe valve 1 having inlet opening 11 and outlet opening 12 for a fluid, and a valve body part 13 for housing the closing element (not shown) of the valve 1. The body part 13 comprises a fixing flange 130 and a slightly conical fixing portion 131. The valve 1 is actuated by coupling a linear actuator to an actuator bar 14.

Fig. 2 shows conventional heating jaws 5a' 5b' that may be fixed to the fixing flange 130 of a valve 1. Heating jaws 5a' 5b' are made of metal and have an electrical connection 6' for supplying the heating jaws 5a', 5b' with electric power. This kind of heating device is quite complex and specific interfaces are required for attachment to the globe valve 1.

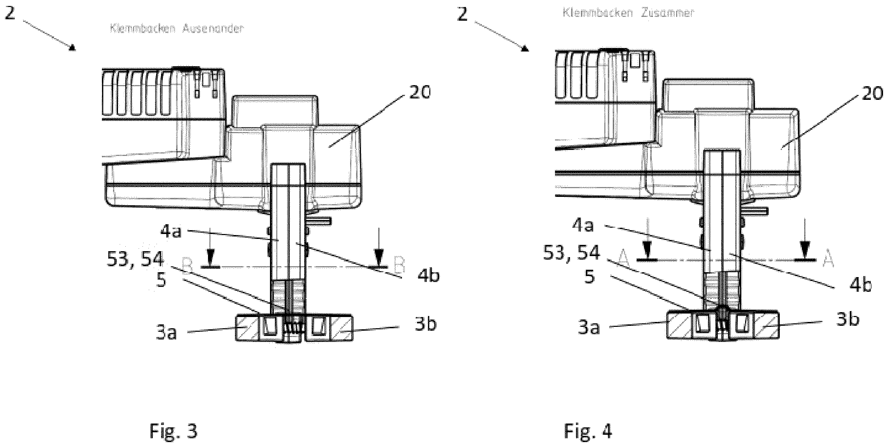

As illustrated in Fig. 3 and Fig. 4 a linear actuator 2 to be coupled to the valve comprises a linear module, which converts a rotation in a linear movement, and a drive motor accommodated in a housing 20 of the linear module 2.

The linear module 2 shown in Figs. 3 and 4 is fixed to the valve of Fig. 1 by attaching clamping jaws 3a, 3b to the conical fixing portion 131 of the valve 1 Fig. 1. The clamping jaws 3a, 3b are connected to the linear actuator via connecting bars 4a, 4b. In Fig. 3 the clamping jaws 3a, 3b are open, in Fig. 4 the clamping jaws 3a, 3b are closed.

In order to prevent formation of ice in or on the surfaces of the globe valve when environmental temperatures are below 0° C, active heating is required. For this purpose, a heating pad 5 is attached to the upper surface (facing the linear actuator housing 20) of the clamping jaws 3a and 3b.

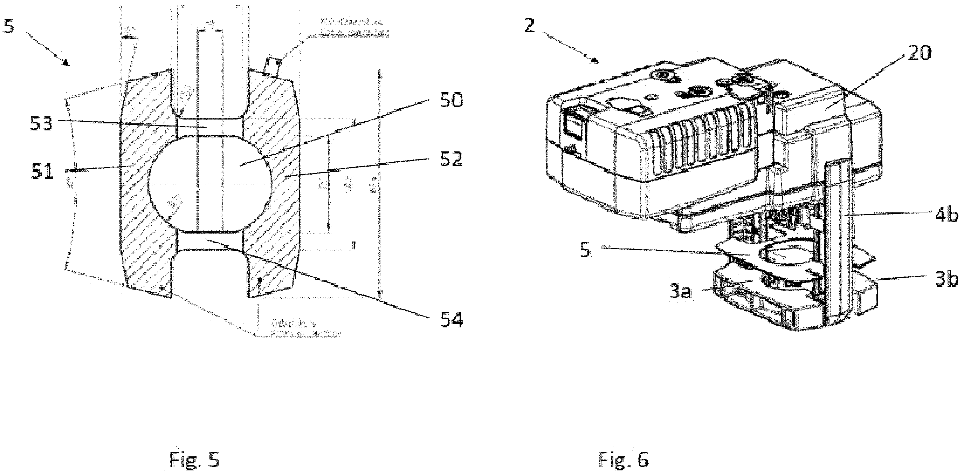

The heating pad 5 is made of silicone (e.g. polysiloxane). In the heating pad 5 heating elements (e.g. heating wires) are integrated and embedded, respectively. The heating pad 5 is illustrated in Fig. 5.

The heating pad 5 comprises a first attachment portion 51 and a second attachment portion 52. Each of the first attachment portion 51 and the second attachment portion 52 have an adhesive foil attached thereto. The position of the adhesive foil is indicated as hatched areas in Fig. 5. For fixing the heating pad 5 to the clamping jaws 3a, 3b the first attachment portion 51 is attached/ glued to a surface of the first clamping jaw 3a and the second attachment portion 52 is attached/ glued toa surface of the second clamping jaw 3b. The respective surfaces are averted from the globe valve 1 and thus face the linear actuator 2, as can be seen in Figs. 3 and 4.

Between the first attachment portion 51 and the second attachment portion 52 there is a first flexible connecting band 53 and a second flexible connecting band 54. Between portions 51, 52, 53 and 54 there is an opening 50 for receiving the conical fixing flange 131. When closing the clamping jaws 3a, 3b for fixing them to the fixing flange 131 the connecting bands 53 and 54 are compressed and adopt a curved shape forming a bulge. This can best be seen in Fig. 3 and 4. The opening 50 adopts the shape of the fixing flange 131.

The silicone pad 5 is a simple and cheap one-piece element which extends over the first clamping jaw 3a and the second clamping jaw 3b. Besides, it allows easy mounting of the heating device. Fig. 6 illustrates the pad 5 before it is fixed to the clamping jaws 3a, 3b. The pad is lowered and sticked to the upper surface of the jaws 3a, 3b.

## Claims

1. A linear actuator (2) for use in HVAC applications comprising:
an actuator housing (20); and
an adapter having a first clamping jaw (3a) and a second clamping jaw (3b) connected to the housing (20) for fixing the linear actuator to a globe valve (1);
**characterized in that**
the linear actuator (2) comprises a heating pad (5) fixed to the first clamping jaw (3a) and the second clamping jaw (3b).

2. The linear actuator (2) according to claim 1, wherein said heating pad (5) is a one-piece silicone pad.

3. The linear actuator (2) according to claims 1 or 2, wherein said heating pad (5) is glued or sticked to the clamping jaws (3a, 3b).

4. The linear actuator (2) according to any of the previous claims, wherein said heating pad (5) has at least one adhesive foil attached to a surface of the pad (5).

5. The linear actuator (2) according to any of the previous claims, wherein said pad (5) comprises a first portion (51) to be fixed to the first clamping jaw (3a), a second portion (52) to be fixed to the second clamping jaw (3b), and at least a flexible connecting piece (53, 54) connecting the first portion (51) and the second portion (52) of the pad (5).

6. The linear actuator (2) according to any of the previous claims, wherein said pad (5) comprises two connecting bands (53, 54), each of them connecting the first portion (51) and the second portion (52) of the pad.

7. The linear actuator (2) according to any of the previous claims, wherein the pad (5) comprises an opening (50) corresponding to an opening arranged between the clamping jaws (3a, 3b), wherein the clamping jaws (3a, 3b) are configured for enclosing a conical portion (131) of the globe valve (1).

8. A heating pad (5) provided for fixing the heating pad to a linear actuator (2), wherein the heating pad (5) is a silicone pad having a silicone body and heating wires embedded in the silicone body.

9. The heating pad (5) of claim 8, wherein said heating pad (5) comprises a first portion (51) to be fixed to a first clamping jaw (3a) of a linear adapter, a second portion (52) to be fixed to a second clamping jaw (3b) of the adapter, and at least a flexible connecting piece (53, 54) connecting the first portion (51) and the second portion (52) of the pad (5).
